# EUROPEAN PATENT SPECIFICATION

(11) **EP 1 216 589 B1**
(45) Date of publication and mention of the grant of the patent: **29.11.2017**
(21) Application number: 00960716.9
(22) Date of filing: 18.09.2000
(51) Int. Cl.: H04W 4/24, H04M 17/00

(54) **HANDLING OF SHORT MESSAGES IN A TELECOMMUNICATION SYSTEM**
BEHANDLUNG VON KURZNACHRICHTEN IN EINEM TELEKOMMUNIKATIONSSYSTEM
TRAITEMENT DE MESSAGES COURTS DANS UN SYSTÈME DE TÉLÉCOMMUNICATION

(30) Priority: 17.09.1999 FI 991988
(43) Date of publication of application: 26.06.2002
(73) Proprietor: Telia Finland Oyj, 00510 Helsinki (FI)
(72) Inventor: ALA-LUUKKO, Sami, FIN-00200 Helsinki (FI)
(74) Representative: Papula Oy
(86) International application number: PCT/FI2000/000787
(87) International publication number: WO 2001/022761

(56) References cited:
- WO-A1-99/18713
- WO-A2-00/28746
- WO-A2-98/34393
- WO-A2-98/56202
- US-A- 5 768 509

## Description

### FIELD OF THE INVENTION

The present invention relates to telecommunication systems. In particular, the present invention relates to a method of charging short messages in a mobile communication system comprising a mobile switching centre, terminal device by means of which the subscriber is connected to the mobile communication system and by means of which a short message is created, a short message switching centre which has been connected to said mobile switching centre, and a gateway which has been connected to said mobile switching centre as well as a service data point which comprises the balance of the subscriber and which has been connected to said gateway. In the method, a short message created by the terminal device is directed from the mobile communication system to said gateway.

### BACKGROUND OF THE INVENTION

Mobile communication networks such as, e.g. GSM networks (GSM, Global System for Mobile communications) have become very popular in a big part of the world. In this application, a mobile communication network is advantageously used to mean a digital mobile communication network. Since the introduction of the digital mobile networks, a short message service (SMS, Short Message Service) has been a part of the services provided. The short message service function allows the mobile subscriber to send text messages that contain up to 160 characters from his or her terminal device to, e.g. another subscriber who has got a terminal device capable of receiving short messages at his or her disposal.

Nowadays, both the fixed telephone networks and the mobile networks provide a wide range of services relating to the possibilities offered by the operators of a wired or wireless network. The services provided may comprise a fixed or a remotely controlled call transfer, call waiting, calling number display blocking, advance notices of billing for subscribers, and different informative message services. The intelligent network system enables a more efficient allocation and control of services. A prepaid call is one good example of a benefit brought by the intelligent network to the customer. For the operators it has enabled a more advanced way of arranging the debiting.

Previously known is a system in which a prepaid service, e.g. a prepaid call has been implemented either by means of the intelligent network or a separate service point. Concerning short messages, a corresponding service has been implemented in accordance with the prior-art technology and maintained by operating separate SIM cards.

In that case, the problem has been a scattered target group, difficult to reach the management of which has been troublesome. A problem associated with this solution has also been the information security, control of malpractice, and maintenance. In this context, information security means a more efficient protection of subscriber-specific information, such as personal data, restrictions of use, balances, and billing traffic. When all the important subscriber-specific information is under the control of the operator in a well-protected database, the level of information security may be made significantly better, and the amount of malpractice may be made less.

The updating of information has also become a problem, i.e. in practice this means the updating of the user data of the SIM cards. Especially, the meaning of real-time operation has become highly topical concerning the services and update operations provided by the operators. This is emphasized especially in the real-time updating of balance data of a subscriber. In that case, the billing will become more clear and effective, and the operator is able to increase the efficiency of his or her operations. The aforementioned real-time updating of information, especially the weak control of billing and allocation has been a significant problem for the solving of which a new method and system has been developed.

WO 98/56202 discloses a method for off-line charging record, that is, toll ticket based billing of value-added information delivered via the Short Message Service (SMS) in the GSM mobile communications system. In WO 98/56202 the presence of chargeable value-added information is detected from a short message in a Short Message Service Centre (SMSC). A charging parameter is added to the short message delivery operation carrying the short message on the Relay Layer (RL) protocol to a Gateway Mobile Services Switching Centre (GMSC). The GMSC detects the presence of the advice of charge parameters in the RL operation and adds the parameters to a charging record created in the GMSC for the delivery of the short message, provided that an acknowledgement is received from a mobile station regarding the SMS. WO 98/56202 concerns particularly the delivery of mobile terminated SMS messages, since such messages carry value-added information from a service provider to the subscriber. The GMSC is used in the case of mobile terminated short messages for the routing of mobile terminated short messages to the current MSC of the target mobile station, in the area of which the mobile station is currently roaming. WO 98/56202 does not disclose a specific routing for mobile originated short message via a gateway MSC. Another example can be found in document WO98/34393. WO 99/18713 concerns a method for the crediting of prepaid accounts stored in an Intelligent Network (IN) Service Control Point (SCP) using a reloading voucher purchased after the obtaining of the prepaid account. In the method a loading service provided by an Intelligent Peripheral (IP) is contacted by the owner of the prepaid account via a call to a specific service number. The owner identifies the voucher via Dual-Tone Multi-Frequency (DTMF) dialling collected in the IP. In response, the prepaid account is identified and credit from a voucher record is transferred to the prepaid account. In WO 99/18713 the prepaid accounts are stored in the SCP, which is accessed by a network switch using Intelligent Network Application Part (INAP) protocol over the Signalling System No. 7 (SS7) signalling. In response to a trigger in the network switch, an initial message is sent from the network switch comprising call connection data to a service logic program in the SCP. The service logic program in the SCP returns control orders to the network switch, which translates the orders into appropriate commands for call control and switching processing in the network switch. The commands may route a call to an Intelligent Peripheral (IP). The SCP monitors the call and accomplishes the debiting of the user prepaid account.

The objective of the invention is to eliminate or at least significantly alleviate the problems mentioned above. One specific objective of the invention is to disclose a new kind of method and system that make it possible to charge short messages based on the criteria for a prepaid call. The new method and system give the operator the possibility for a real-time updating of user-specific information, and a general maintenance, a better control of the user restrictions of short messages, and a more efficient information security.

### BRIEF DESCRIPTION OF THE INVENTION

The invention relates to a method of charging short messages in a mobile communication system, in which method a short message is created in a terminal device (MS) of a subscriber, the short message is received in mobile switching centre (MSC) and a short message switching centre (SMSC). The method is characterised in that the method further comprises the following steps of: receiving identification data associated with the subscriber from a home location register (HLR) to a visitor location register; directing the short message from the mobile switching centre (MSC) to a gateway (GW) based on an analysis of the identification data; performing a database query to a database (SDP) by the gateway (GW) in order to check a balance of the subscriber, said query being formatted in a structured database query language; transmitting the short message to an address selected by the subscriber, if there is enough balance left; and updating the balance of the subscriber in the database (SDP) by the gateway (GW) based on a price of the short message transmitted.

The invention relates also to a system of arranging billing for short messages in a mobile communication system comprising: a mobile switching centre (MSC); a terminal device (MS) by means of which the subscriber is connected to the mobile communication system and by means of which a short message is created; a short message switching centre (SMSC) which is configured to communicate with said mobile switching centre (MSC); a gateway (GW) connected to said mobile switching centre (MSC). The system is characterised in that the system further comprises: means for receiving identification data associated with the subscriber from a home location register (HLR) to a visitor location register; means for directing the short message from the mobile switching centre (MSC) to a gateway (GW) based on an analysis of the identification data; means for performing a database query to a database (SDP) by the gateway (GW) in order to check a balance of the subscriber, said query being formatted in a structured database query language; means for transmitting the short message to an address selected by the subscriber, if there is enough balance left; and means for updating the balance of the subscriber in the database (SDP) by the gateway (GW) based on a price of the short message transmitted.

The present invention is used for the implementation of a prepaid short message service as a functionality of the network in such a way that for each separate subscriber, a balance of short messages he or she is entitled to is stored on the service data point. After each short message sent, the subscriber-specific balance is automatically updated. If there is no balance left, the subscriber is sent an error message, and also in that case if the subscriber is not entitled to the service in question.

The mobile communication system in accordance with the invention comprises a mobile switching centre, and a short message switching centre as well as a terminal device which has been connected to the mobile communication system. The service data point has been connected to the gateway. In accordance with the invention, the new functionality relating to the charging for a short message is implemented by the gateway. The gateway contains such progressive features that the standard components of a mobile communication network do not include. As concerns the functionality, essential is the fact that the gateway enables signalling between different network components without the actual network components having the ability to communicate with each other.

In accordance with the method, not every short message created by the terminal device is directed from the mobile communication system to the gateway. There are directed only those which the network has recognized as belonging there. When the subscriber is entitled to the aforementioned service, in response to said short message, the balance of the subscriber is checked from the service data point, and the short message is transmitted to the address selected by the subscriber, if there is enough balance left.

In an embodiment of the invention, the short message is routed from the terminal device to the gateway according to an ick analysis of the mobile communication system. Ick analysis (Ick, Intelligent category keying) means a subscriber-specific identification analysis for calls and short messages. The identification data of the ick analysis has been stored on a home location register, e.g. on connection of the terminal device to the network. The identification data is transferred to the visitor location register, which is, e.g. in conjunction with the mobile switching centre.

In an embodiment, the terminal device is sent a notification via the gateway, if the short message was not sent. The notification may be, e.g. a SMS type of error message or an acknowledgement message or some other corresponding message to be sent via the network through which the user is informed, e.g. of the running out of balance or of a function contradictory to the user restrictions.

In an embodiment of the invention, the subscriber-specific checking of balance is effected from the service data point, from a data record corresponding to the A number of the short message, and the balance is updated on the service data point in response to the short message transmitted to the receiver.

In accordance with the invention, the billing system comprises a service data point on which the subscriber's balance has been stored and which is connected to the gateway. The system comprises, in addition, an identifier by means of which it is verified whether the subscriber is a subscriber of a prepaid service; a checker by means of which the balance of said subscriber of a short message is checked from the service data point in response; and a transmission component by means of which said short message is transmitted to the address selected by the subscriber, if there is enough balance left.

In an embodiment, the system comprises a data recorder for updating the balance on the service data point in response to the short message transmitted to the receiver as well as a central program by means of which data records are maintained relating to the subscriber balances and prices of short messages.

In an embodiment, said gateway comprises an acknowledgement device for sending a message to the terminal device, if the short message was not sent. In that case, the subscriber is promptly informed of the transmission failure and may act as instructed by the message.

In an embodiment, the mobile communication system in accordance with the invention comprises a control component for directing the short message to the gateway based on the ick analysis. The ick analysis is described in greater detail in the standards, and is therefore not described herein in greater detail.

In an embodiment of the invention, the gateway comprises a payment class identifier for determining the payment class of a short message based on the A and B numbers.

In addition, the gateway may comprise a data recorder for updating the balance on the service data point in response to the short message transmitted to the receiver as well as a central program by means of which data records are maintained relating to the subscriber balances and prices of short messages.

### BRIEF DESCRIPTION OF THE DRAWINGS

In the following section, the invention will be described by way of examples of its embodiments with reference to the attached drawing, in which
Fig.1 is a schematic representation of one embodiment of the system of the invention,
Fig. 2 represents one advantageous signalling diagram describing the function of the present invention, and
Fig. 3 is a flow chart illustrating one method of the invention.

### DETAILED DESCRIPTION OF THE INVENTION

As the starting point, attaching short messages to a prepaid service has served a new way for utilizing the components of the intelligent network. A normal prepaid call is directed from the terminal device via the service switching point (SSP) of the intelligent network service to the service control point (SCP) of the intelligent network service, from which in accordance with the service logic, a query is made to the service data point (SDP). After this, if the subscriber is entitled to the call, the call is normally transmitted further on. In the case of a short message, the message that was sent is directed from the terminal device to the short message switching centre (SMSC) from which it is directed further on to the gateway (GW) in the form of a MSISDN number (Mobile Station ISDN Number). The gateway performs the balance checking and the update on the service data point (SDP). If the subscriber is entitled to the short message, the message is transmitted further on in a normal way.

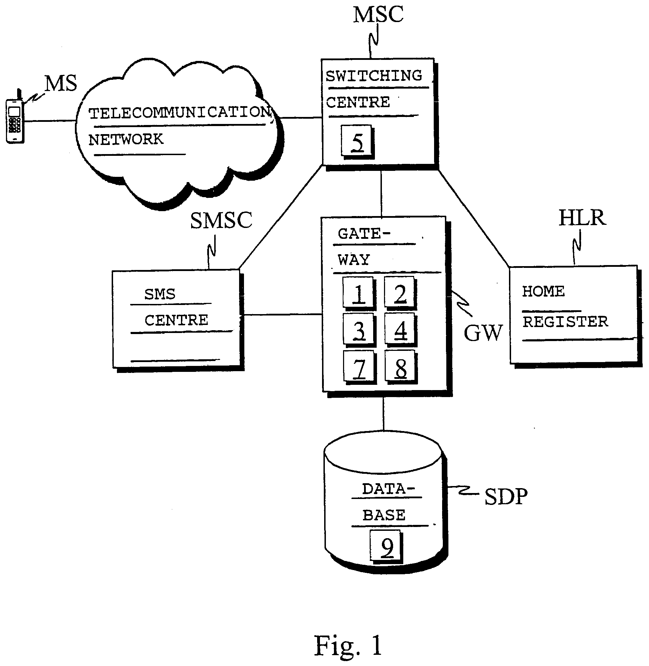

The system as illustrated in Figure 1 comprises a terminal device MS and a centre MSC. In this example, the centre is a mobile switching centre (MSC). The terminal device is advantageously a mobile subscriber (MS). The mobile subscriber MS has been connected to the mobile switching centre MSC via a radio interface. The system also comprises a gateway (GW), a home location register (HLR), a short message switching centre (SMSC), and a service data point (SDP). Both the gateway GW and the home location register HLR have been connected to the mobile switching centre MSC. In addition, the gateway GW has been connected to the short message switching centre and the service data point SDP.

Further, the system as illustrated in Figure 1 comprises an identifier 1 by means of which it is verified whether the subscriber is a subscriber of a prepaid service; a checker 2 by means of which the balance of the subscriber of said short message is checked from the service data point SDP in response; and a transmission component 3 by means of which said short message is transmitted to the address selected by the subscriber, if there is enough balance left. The gateway GW also comprises an acknowledgement device 4 for sending a message to the mobile subscriber MS, if the short message was not sent.

In addition, the mobile communication system as illustrated in Figure 1 comprises a control component for directing the short message to the gateway GW based on the ick analysis. The gateway GW further comprises a payment class identifier 7 for determining the payment class of a short message based on the B number. Further, the system comprises a data recorder 8 for updating the balance on the service data point in response to the short message transmitted to the receiver as well as a central program 9 by means of which data records are maintained relating to the subscriber balances and prices of short messages.

The identifier 1 of the gateway GW receives the short message and based on the B number identifies the payment class of the short message and whether it is a question about a subscriber of a prepaid service. The identifier reads the payment class in accordance with predetermined characters and transmits an acceptance or non-acceptance message concerning the subscriber's right to the prepaid service. The checker 2 checks the balance of the subscriber concerned by means of a database query, e.g. a SQL, structured query language, from the service data point SDP. By means of the data recorder 8 the balance is updated on the service data point SDP in response to the short message transmitted to the receiver.

The gateway GW may comprise, e.g. the following components and functions:
- the service data points required, which in this context include, e.g. the subscriber-specific balance data.
- computer components
- signalling components, (SS7, Signalling System number 7)
- the software required (for instance, the service creation, performing and management environment, description of services)
- signalling protocols (INAP, MAP, TCAP, TCP/IP; INAP, Intelligent Network Application Part; MAP, Mobile Application Part; TCAP, Transaction Capabilities Application part; TCP/IP, Transmission Control Protocol, Internet Protocol)

The service data point SDP comprises a central program 9 for maintaining data records relating to the subscriber balances and prices of short messages. By means of the central program 9 the maintainer of the databases is able to react to the update requests made by the data recorder 8 of the gateway GW that are deletion and saving operations to the record fields.

Let it be mentioned, in addition, that the control component itself is a normal element of a mobile switching centre.

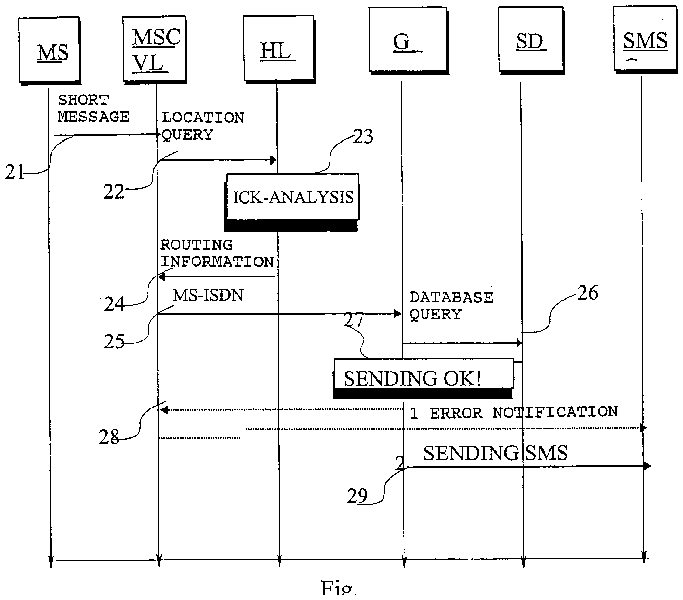

Fig. 2 is one advantageous example of signalling representing the function of the system in accordance with the invention. As illustrated in Figure 2, the short message comes to the mobile switching centre MSC, arrow 21. From the mobile switching centre MSC, a location query, SendRoutingInfo message is sent to the home location register HLR, in which case the location area of the mobile subscriber is identified, arrow 22. Step 23 describes an ick analysis (Ick, Intelligent category keying) by means of which a subscriber-specific identifier is generated for calls and short messages. The home location register HLR returns the routing information to the mobile switching centre, arrow 24. The short message is sent in the form MS-ISDN to the gateway GW, arrow 25, after which database queries are made from the gateway to the service data point SDP, arrow 26. In the query, the subscriber's balance is checked and updated. The queries are made using a known database query language, advantageously, e.g. a SQL, structured query language). SQL is a general standard and a programming language which enables one to make different queries, e.g. to databases. If there is enough balance, the short message is sent further on, step 27. If there is not enough balance, a notification thereof is sent to the terminal device of the subscriber via the mobile switching centre MSC and the short message switching centre SMSC, arrow 28. If there is enough balance, the short message is transmitted further on to the short message switching centre and from it based on the routing information to the receiver.

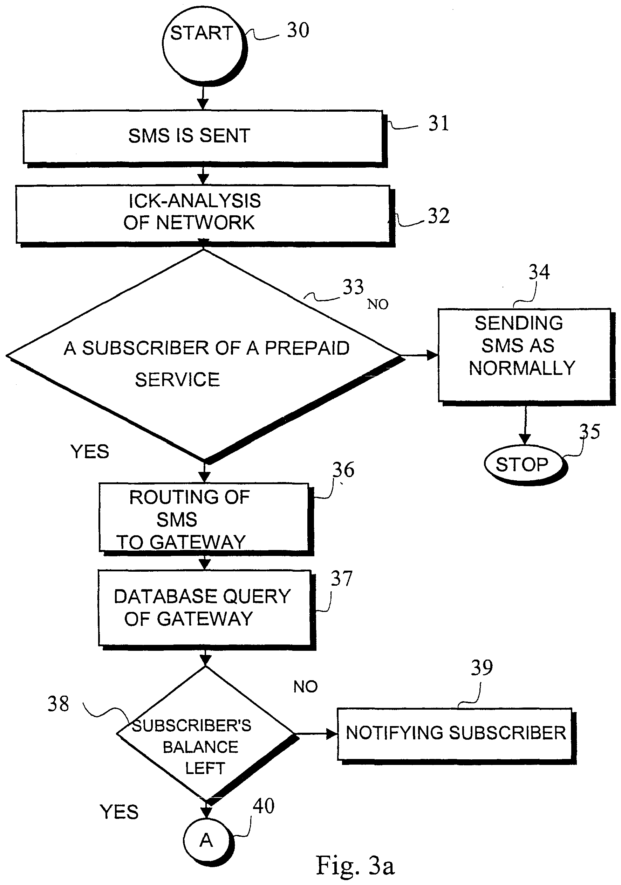

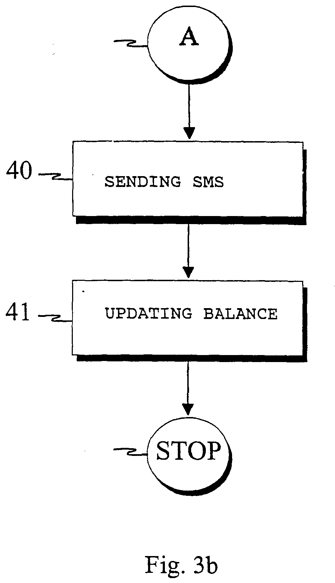

Fig. 3 is a flow chart illustrating one example of the method of the invention. At a step 30, a short message is created on the terminal device MS, and at a step 31 this message is sent from the terminal device to the mobile switching centre MSC. At a step 32, an ick analysis of the network is performed, and at a step 33 it is verified whether it is a question about a subscriber of a prepaid service. If it is a question about an ordinary short message, then it is transmitted further on normally, step 34. Step 35 describes the end of the process, when the receiver has received the message that was sent. If it is a question about a short message of a subscriber of a prepaid service, it is routed to the gateway GW, step 36, and at a step 37 a database query according to the service logic is made from the gateway relating to the subscriber's balance and the payment class of the short message. At a step 38, the subscriber's balance is checked and at a step 39 the subscriber is sent a notification, if there is no balance left. At a step 40, the short message is transmitted further on via the short message switching centre SMSC to the receiver, and at a step 41 the subscriber's balance is updated according to the fact of what price the short messages transmitted have been.

The invention is not restricted to the examples of its embodiments, instead various changes are possible within the scope of the inventive idea defined by the claims.

## Claims

1. A method of charging short messages in a mobile communication system, in which method a short message is created in a terminal device (MS) of a subscriber, the short message is received in mobile switching centre (MSC) and a short message switching centre (SMSC), **characterised in that** the method further comprises the following steps:
receiving identification data associated with the subscriber from a home location register (HLR) to a visitor location register, wherein the identification data is provided by an intelligent category keying analysis and the identification data is stored by the home location register;
directing the short message from the mobile switching centre (MSC) to a gateway (GW) based on an analysis of the identification data;
verifying whether the subscriber is a subscriber of a prepaid service;
transmitting the short message further on normally when the subscriber is not a subscriber of the prepaid service;
when the subscriber is a subscriber of the prepaid service, performing a database query to a database (SDP) by the gateway (GW) in order to check a balance of the subscriber, said query being formatted in a structured database query language;
transmitting the short message to an address selected by the subscriber, if there is enough balance left; and
updating the balance of the subscriber in the database (SDP) by the gateway (GW) based on a price of the short message transmitted.

2. A method as defined in claim 1, **char- acterised** in that a notification is sent from the gateway (GW) to said terminal device (MS), if the short message was not sent.

3. A method as defined in claim 1 or 2, **characterised in that** on said gateway (GW) the payment class of the short message is selected based on the B number.

4. A method as defined in claim 1, 2 or 3, **characterised in that** the subscriber-specific balance is checked form said database (SDP) based on the A number of the short message.

5. A system of arranging billing for short messages in a mobile communication system comprising:
a mobile switching centre (MSC);
a terminal device (MS) by means of which the subscriber is connected to the mobile communication system and by means of which a short message is created;
a short message switching centre (SMSC) which is configured to communicate with said mobile switching centre (MSC);
a gateway (GW) connected to said mobile switching centre (MSC); **characterised in that** the system comprises:
means for receiving identification data associated with the subscriber from a home location register (HLR) to a visitor location register, wherein the identification data is provided by an intelligent category keying analysis and the identification data is stored by the home location register;
means for directing the short message from the mobile switching centre (MSC) to a gateway (GW) based on an analysis of the identification data;
means for verifying whether the subscriber is a subscriber of a prepaid service;
means for transmitting the short message further on normally when the subscriber is not a subscriber of the prepaid service;
means for performing a database query to a database (SDP) by the gateway (GW) in order to check a balance of the subscriber when the subscriber is a subscriber of the prepaid service, said query being formatted in a structured database query language;
means for transmitting the short message to an address selected by the subscriber, if there is enough balance left; and
means for updating the balance of the subscriber in the database (SDP) by the gateway (GW) based on a price of the short message transmitted.

6. A system as defined in claim 5, **char - acterised** in that said gateway (GW) comprises an acknowledgement device (4) for sending a notification to the terminal device (MS), if the short message was not sent.

7. A system as defined in claim 5 or 6, **characterised in that** said gateway (GW) comprises a payment class identifier (7) for determining the payment class of the short message based on a B subscriber number.

## Patentansprüche

1. Verfahren eines Berechnens von Kurznachrichten in einem Mobilkommunikationssystem, wobei bei dem Verfahren eine Kurznachricht bei einem Terminalgerät (MS) eines Teilnehmers erzeugt wird, wobei die Kurznachricht bei einem Mobilvermittlungszentrum (MSC) und einem Kurznachrichtvermittlungszentrum (SMSC) empfangen wird,
**dadurch gekennzeichnet, dass** das Verfahren ferner folgende Schritte umfasst
Empfangen von Identifizierungsdaten, die mit dem Teilnehmer verknüpft sind, von einem Heimlokationsregister (HLR) zu einem Besucherlokationsregister, wobei die Identifizierungsdaten mittels einer intelligenten Kategorieschlüsselanalyse bereitgestellt sind und die Identifizierungsdaten durch das Heimlokationsregister gespeichert sind,
Leiten der Kurznachricht von dem Mobilvermittlungszentrum (MSC) zu einem Gateway (GW) basierend auf einer Analyse der Identifizierungsdaten,
Verifizieren, ob der Teilnehmer ein Teilnehmer eines Vorauszahldienstes ist,
Übertragen der Kurznachricht weiterhin normal, wenn der Teilnehmer kein Teilnehmer des Vorauszahldienstes ist,
wenn der Teilnehmer ein Teilnehmer des Vorauszahldienstes ist, Durchführen einer Datenbankabfrage an eine Datenbank (SDP) durch das Gateway (GW), um ein Guthaben des Teilnehmers zu prüfen, wobei die Abfrage in einer strukturierten Datenbankabfragesprache formatiert ist,
Übertragen der Kurznachricht zu einer durch den Teilnehmer ausgewählten Adresse, wenn genügend Guthaben verbleibend ist, und
Aktualisieren des Guthabens des Teilnehmers in der Datenbank (SDP) durch das Gateway (GW) basierend auf einem Preis der übertragenen Kurznachricht.

2. Verfahren nach Anspruch 1, **dadurch gekennzeichnet, dass** eine Benachrichtigung von dem Gateway (GW) zu dem Terminalgerät (MS) gesendet wird, wenn die Kurznachricht nicht gesendet wurde.

3. Verfahren nach Anspruch 1 oder 2, **dadurch gekennzeichnet, dass** bei dem Gateway (GW) die Bezahlklasse der Kurznachricht basierend auf der B-Nummer ausgewählt wird.

4. Verfahren nach einem der Ansprüche 1, 2 oder 3, **dadurch gekennzeichnet, dass** das teilnehmerspezifische Guthaben von der Datenbank (SDP) basierend auf der A-Nummer der Kurznachricht geprüft wird.

5. System eines Anordnens einer Gebührenerfassung für Kurznachrichten in einem Mobilkommunikationssystem, mit
einem Mobilvermittlungszentrum (MSC),
einem Terminalgerät (MS), mittels dem der Teilnehmer zu dem Mobilkommunikationssystem verbunden ist und mittels dem eine Kurznachricht erzeugt ist,
einem Kurznachrichtenvermittlungszentrum (SMSC), das dazu eingerichtet ist, um mit dem Mobilvermittlungszentrum (MSC) zu kommunizieren,
einem Gateway (GW), das mit dem Mobilvermittlungszentrum (MSC) verbunden ist,
**dadurch gekennzeichnet, dass** das System umfasst
eine Einrichtung zum Empfang von Identifizierungsdaten, die mit dem Teilnehmer verknüpft sind, von einem Heimlokationsregister (HLR) zu einem Besucherlokationsregister, wobei die Identifizierungsdaten durch eine intelligente Kategorieschlüsselanalyse bereitgestellt sind und die Identifizierungsdaten durch das Heimlokationsregister gespeichert sind,
eine Einrichtung zur Leitung der Kurznachricht von dem Mobilvermittlungszentrum (MSC) zu einem Gateway (GW) basierend auf einer Analyse der Identifizierungsdaten,
eine Einrichtung zur Verifizierung, ob der Teilnehmer ein Teilnehmer eines Vorauszahldienstes ist,
eine Einrichtung zur Übertragung der Kurznachricht weiterhin normal, wenn der Teilnehmer kein Teilnehmer des Vorauszahldienstes ist,
eine Einrichtung zur Durchführung einer Datenbankabfrage an eine Datenbank (SDP) durch das Gateway (GW), um ein Guthaben des Teilnehmers zu prüfen, wenn der Teilnehmer ein Teilnehmer des Vorauszahldienstes ist, wobei die Abfrage in einer strukturierten Datenbankabfragesprache formatiert ist,
eine Einrichtung zur Übertragung der Kurznachricht zu einer durch den Teilnehmer ausgewählten Adresse, wenn genügend Guthaben verbleibend ist, und
eine Einrichtung zur Aktualisierung des Guthabens des Teilnehmers in der Datenbank (SDP) durch das Gateway (GW) basierend auf einem Preis der übertragenen Kurznachricht.

6. System nach Anspruch 5, **dadurch gekennzeichnet, dass** das Gateway (GW) ein Bestätigungsgerät (4) zum Senden einer Benachrichtigung an das Terminalgerät (MS), wenn die Kurznachricht nicht gesendet wurde, umfasst.

7. System nach einem der Ansprüche 5 oder 6, **dadurch gekennzeichnet, dass** das Gateway (GW) eine Bezahlklassenidentifiziereinrichtung (7) zur Bestimmung der Bezahlklasse der Kurznachricht basierend auf einer B-Teilnehmernummer umfasst.

## Revendications

1. Procédé de chargement de messages courts dans un système de communication mobile, dans lequel un message court est créé dans un dispositif terminal (MS) d'un abonné, le message court est reçu dans un centre de commutation mobile (MSC) et un centre de commutation de messages courts (SMSC), **caractérisé en ce que** le procédé comprend en outre les étapes suivantes :
la réception de données d'identification associées à l'abonné d'un registre de localisation de rattachement (HLR) à un registre de localisation de visiteurs, dans lequel les données d'identification sont fournies par une analyse de saisie de catégorie intelligente et les données d'identification sont stockées par le registre de localisation de rattachement ;
l'adressage du message court du centre de commutation mobile (MSC) à une passerelle (GW) sur la base d'une analyse des données d'identification ;
la vérification du fait que l'abonné est un abonné d'un service prépayé ;
la transmission du message court ultérieurement normalement quand l'abonné n'est pas un abonné du service prépayé ;
quand l'abonné est un abonné du service prépayé, l'exécution d'une interrogation de base de données sur une base de données (SDP) par la passerelle (GW) de manière à vérifier un solde de l'abonné, ladite interrogation étant formatée dans un langage d'interrogation de base de données structuré ;
la transmission du message court à une adresse sélectionnée par l'abonné, s'il reste un solde suffisant ; et
la mise à jour du solde de l'abonné dans une base de données (SDP) par la passerelle (GW) sur la base d'un prix du message court transmis.

2. Procédé selon la revendication 1, **caractérisé en ce qu'**une notification est envoyée de la passerelle (GW) audit dispositif terminal (MS), si le message court n'a pas été envoyé.

3. Procédé selon la revendication 1 ou 2, **caractérisé en ce que**, sur ladite passerelle (GW), la classe de paiement du message court est sélectionnée sur la base du numéro B.

4. Procédé selon la revendication 1, 2 ou 3, **caractérisé en ce que** le solde spécifique à l'abonné est vérifié à partir de ladite base de données (SDP) sur la base du numéro A du message court.

5. Système d'agencement de facturation de messages courts dans un système de communication mobile, comprenant :
un centre de commutation mobile (MSC) ;
un dispositif terminal (MS) au moyen duquel l'abonné est connecté au système de communication mobile et au moyen duquel un message court est créé ;
un centre de commutation de messages courts (SMSC) qui est configuré pour communiquer avec ledit centre de commutation mobile (MSC) ;
une passerelle (GW) connectée audit centre de commutation mobile (MSC) ; **caractérisé en ce que** le système comprend :
des moyens pour recevoir des données d'identification associées à l'abonné d'un registre de localisation de rattachement (HLR) à un registre de localisation de visiteurs, dans lequel les données d'identification sont fournies par une analyse de saisie de catégorie intelligente et les données d'identification sont stockées par le registre de localisation de rattachement ;
des moyens pour diriger le message court du centre de commutation mobile (MSC) à une passerelle (GW) sur la base d'une analyse des données d'identification ;
des moyens pour vérifier le fait que l'abonné est un abonné d'un service prépayé ;
des moyens pour transmettre le message court ultérieurement normalement quand l'abonné n'est pas un abonné du service prépayé ;
des moyens pour effectuer une interrogation de base de données sur une base de données (SDP) par la passerelle (GW) de manière à vérifier un solde de l'abonné quand l'abonné est un abonné du service prépayé, ladite interrogation étant formatée dans un langage d'interrogation de base de données structuré ;
des moyens pour transmettre le message court à une adresse sélectionnée par l'abonné, s'il reste un solde suffisant ; et
des moyens pour mettre à jour le solde de l'abonné dans la base de données (SDP) par la passerelle (GW) sur la base d'un prix du message court transmis.

6. Système selon la revendication 5, **caractérisé en ce que** ladite passerelle (GW) comprend un dispositif d'accusé de réception (4) pour envoyer une notification au dispositif terminal (MS), si le message court n'a pas été envoyé.

7. Système selon la revendication 5 ou 6, **caractérisé en ce que** ladite passerelle (GW) comprend un identificateur de classe de paiement (7) pour déterminer la classe de paiement du message court sur la base d'un numéro d'abonné B.
